# EUROPÄISCHE PATENTSCHRIFT

(11) **EP 0 898 390 B1**
(45) Veröffentlichungstag und Bekanntmachung des Hinweises auf die Patenterteilung: **26.04.2006**
(21) Anmeldenummer: 98440175.2
(22) Anmeldetag: 14.08.1998
(51) Int. Cl.: H04B 10/155

(54) **Verfahren und Vorrichtung zum Erzeugen eines optischen Ausgangssignals**
Method and apparatus for generating an optical output signal
Procédé et dispositif pour produire un signal de sortie optique

(30) Priorität: 21.08.1997 DE 19736380
(43) Veröffentlichungstag der Anmeldung: 24.02.1999
(73) Patentinhaber: ALCATEL, 75008 Paris (FR)
(72) Erfinder: Schmuck, Harald, 70825 Korntal-Münchingen (DE)
(74) Vertreter: Schätzle, Albin

(56) Entgegenhaltungen:
- EP-A- 0 493 816
- HOFSTETTER R ET AL: "DISPERSION EFFECTS IN OPTICAL MILLIMETER-WAVE SYSTEMS USING SELF-HETERODYNE METHOD FOR TRANSPORT AND GENERATION" IEEE TRANSACTIONS ON MICROWAVE THEORY AND TECHNIQUES, IEEE INC. NEW YORK, US, Bd. 43, Nr. 9, PART 2, 1. September 1995 (1995-09-01), Seiten 2263-2269, XP000524214 ISSN: 0018-9480
- O'REILLY J J ET AL: "RACE R2005: MICROWAVE OPTICAL DUPLEX ANTENNA LINK" IEE PROCEEDINGS J. OPTOELECTRONICS, INSTITUTION OF ELECTRICAL ENGINEERS. STEVENAGE, GB, Bd. 140, Nr. 6, PART J, 1. Dezember 1993 (1993-12-01), Seiten 385-391, XP000422802 ISSN: 0267-3932

## Beschreibung

Die vorliegende Erfindung betrifft sowohl ein Verfahren zum Erzeugen eines optischen Ausgangssignals, bei dem aus einem optischen Signal festgelegter Frequenz zwei optische Signalanteile unterschiedlicher Frequenzen erzeugt werden, wobei dem einen der beiden optischen Signalanteile ein Datensignal aufgeprägt wird und beide optischen Signalanteile gemeinsam das optische Ausgangssignal bilden, als auch eine optische Sendevorrichtung zum Erzeugen eines optischen Ausgangssignals mit zwei optischen Signalanteilen, umfassend eine die zwei optischen Signalanteile aus einem optischen Signal festgelegter Frequenz erzeugende Einrichtung und einen Modulator, der einem der beiden optischen Signale ein Datensignal aufprägt.

Ein derartiges Verfahren und eine derartige Vorrichtung zum Erzeugen eines optischen Ausgangssignals sind z.B. durch die Veröffentlichung von J.J. O'Reilly et al., "RACE R2005: microwave optical duplex antenna link", IEE Proceedings-J, Vol. 140, No. 6, December 1993, Seiten 385-391 bekanntgeworden.

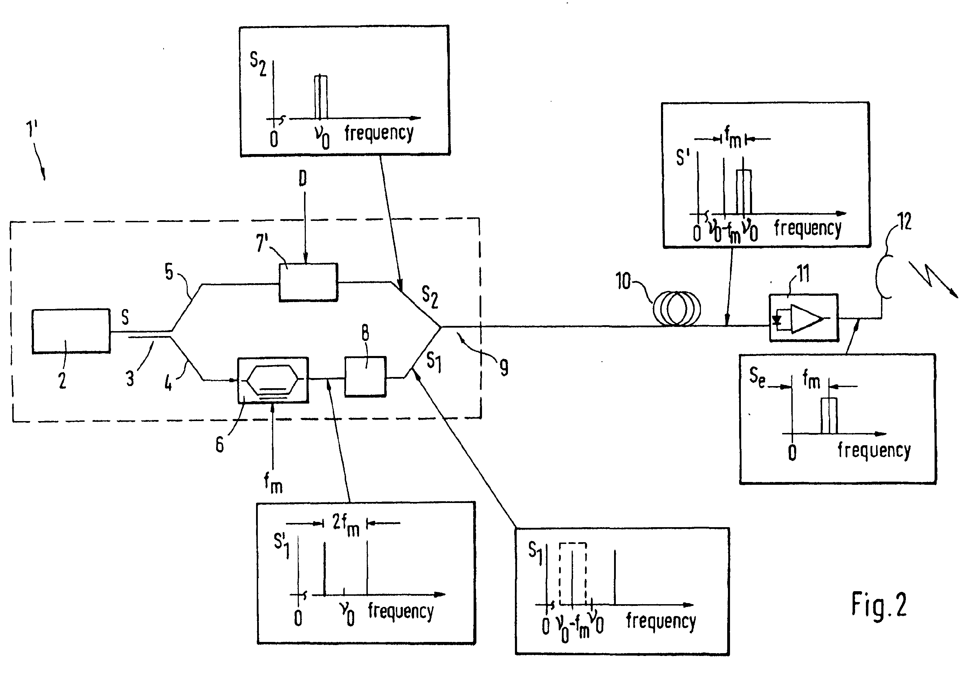

Die dort in Figur 2 gezeigte optische Sendevorrichtung (dual frequency optical source) umfaßt einen DFB-Laser, einen ersten optischen Modulator, eine Signalquelle (signal source) und ein optisches Filter. Das vom DFB-Laser ausgesandte Licht ist ein Dauer-Signal (cw-Signal, cw: continuous wave) mit einer optischen Frequenz ν₀ (Trägerfrequenz). Dieses Licht wird einem Eingang des ersten optischen Modulators zugeführt, der von der Signalquelle gesteuert wird. Das aus dem optischen Modulator austretende Licht hat ein Frequenzspektrum mit zwei ausgeprägten Frequenzanteilen (Seitenbandträger), die im Abstand der Modulationsfrequenz Fₘ der Signalquelle symmetrisch um die unterdrückte optische Trägerfrequenz ν₀ angeordnet sind, d.h., die beiden Frequenzanteile haben einen Frequenzabstand von 2Fₘ. Das dem Ausgang des ersten optischen Modulators nachgeschaltete optische Filter trennt die beiden Frequenzanteile, die jeweils an einem Ausgang des optischen Filters anliegen.

Um mit einer solchen optischen Sendeeinrichtung ein durch ein Daten- oder Nachrichtensignal moduliertes Licht auszusenden, ist der eine (erste) Ausgang des optischen Filters mit einem zweiten optischen Modulator und der andere (zweite) Ausgang mit einem Koppler verbunden. Der zweite optische Modulator moduliert den am ersten Ausgang des optischen Filters austretenden Lichtanteil mit dem Datensignal. Es handelt sich dabei um eine externe Modulation des am Ausgang des optischen Filters austretenden Lichtanteils. Das Frequenzspektrum des modulierten Lichtanteils hat also nur einen der beiden Frequenzanteile. Dieser modulierte Lichtanteil, der am Ausgang des zweiten optischen Modulators austritt, und der am zweiten Ausgang des optischen Filters austretende Lichtanteil werden durch den Koppler als optisches Ausgangssignal in einen Lichtwellenleiter eingekoppelt. Das eingekoppelte Licht ist daher aus zwei Lichtanteilen zusammengesetzt: ein mit dem Datensignal modulierter Lichtanteil mit dem einen Seitenbandträger und ein unmodulierter Lichtanteil mit dem zweiten Seitenbandträger. Dieses zusammengesetzte Licht trifft in einem optischen Empfänger auf eine Photodiode, wodurch durch kohärente Überlagerung der beiden Lichtanteile das gewünschte Datensignal im Millimeter(mm)-Wellenbereich entsteht.

Bei dieser bekannten Vorrichtung werden die beiden Lichtanteile und die Modulation eines der beiden Lichtanteile in separaten Einrichtungen durchgeführt. Daher erfordert diese bekannte Vorrichtung einen hohen Aufwand und ist daher teuer.

Es ist daher die Aufgabe der Erfindung, bei dem eingangs genannten Verfahren und der eingangs genannten Vorrichtung den Aufwand zur Erzeugung der beiden optischen Signalanteile bzw. des optischen Ausgangssignals zu verringern.

Diese Aufgabe wird bei dem Verfahren erfindungsgemäß dadurch gelöst, daß das optische Signal zwei Zweigen zugeführt wird, daß in einem der beiden Zweige bezüglich des optischen Signals zwei optische Seitenbandträger erzeugt werden, von denen eines ausgeblendet wird, daß dem optischen Signal in einem der beiden Zweige ein, vorzugsweise elektrisches, Datensignal, aufgeprägt wird, und daß danach die beiden aufgeteilten optischen Signalanteile aus den beiden Zweigen wieder zu einem einzigen optischen Ausgangssignal zusammengeführt werden.

Das Verfahren ermöglicht einen nur geringen Aufwand bezüglich der Zahl der Komponenten, da der mit dem Datensignal modulierte Seitenbandträger und das unmodulierte Referenzsignal in einer gemeinsamen Einheit erzeugt werden können. Entspricht der Frequenzabstand fₘ der Trägerband-Frequenz ν₀ zur Seitenbandträgerfrequenz ν₀±fₘ dem Zweifachen des oben genannten Frequenzabstandes, also 2Fₘ, so ergibt sich wie dort ebenfalls ein unmoduliertes Referenzsignal und ein moduliertes Trägersignal mit einem Frequenzabstand von 2Fₘ. Dieses Verfahren ermöglicht auch den Einsatz von einfachen, nur in Transmission arbeitenden Filtern wie z.B. Fabry-Perot-Filtern oder Festfiltern.

Bei einer ersten bevorzugten Ausgestaltung des Verfahrens werden in demselben Zweig die beiden Seitenbandträger erzeugt und das Datensignal aufgeprägt.

In einer zweiten anderen Ausgestaltung des Verfahrens werden hingegen in dem einen Zweig die beiden Seitenbandträger erzeugt, und wird das Datensignal in dem anderen Zweig aufgeprägt.

Vorzugsweise werden dabei die beiden Seitenbandträger durch Modulation mittels eines elektrischen mm-Wellensignals mit festgelegter elektrischer Frequenz erzeugt.

Die obengenannte Aufgabe wird bei der optischen Sendevorrichtung der eingangs genannten Art gelöst durch einen optischen Teiler, der das optische Signal der Lichtquelle zwei Zweigen zuführt, eine im ersten Zweig vorgesehene Einrichtung zum Erzeugen zweier optischer Seitenbandträger bezüglich des optischen Signals, ein der Einrichtung nachgeordnetes optisches Filter zum Ausblenden eines der beiden Seitenbandträger, wobei der Modulator dem optischen Signal in einem der beiden Zweige ein Datensignal aufprägt, und einen optischen Koppler, der die beiden Signalanteile in beiden Zweigen wieder zu einem gemeinsamen optischen Ausgangssignal zusammenführt.

Mit dieser optischen Sendevorrichtung lassen sich die oben bereits hinsichtlich des Verfahrens angeführten Vorteile erzielen, wobei die Mehrkanaltauglichkeit (Transparenz für alle Modulationsarten und Modulationsformate) der eingangs genannten bekannten optischen Sendevorrichtung beibehalten werden kann.

Bei einer ersten bevorzugten Ausführungsform der optischen Sendevorrichtung sind in demselben Zweig sowohl die Einrichtung zur Erzeugung der beiden Seitenbandträger als auch der Modulator zum Aufprägen des Datensignals vorgesehen.

Als vorteilhafte Weiterbildung dieser Ausführungsform kann vorgesehen sein, daß die Einrichtung und der Modulator als gemeinsamer Modulator, z.B. als Mach-Zehnder-Modulator, ausgebildet sind. Bei dieser Weiterbildung werden dem optischen Signal gleichzeitig das mm-Wellensignal und das Datensignal aufmoduliert, wodurch sich die Zahl der erforderlichen Komponenten der optischen Sendevorrichtung weiter reduzieren läßt.

Bei einer anderen, zweiten Ausführungsform der optischen Sendevorrichtung ist in dem einen Zweig die Einrichtung zur Erzeugung der beiden Seitenbandträger und in dem anderen Zweig der Modulator zum Aufprägen des Datensignals vorgesehen.

In einem weiteren Aspekt betrifft die Erfindung auch ein Nachrichtenübertragungssystem mit einem Lichtwellenleiter, einem optischen Empfänger und einer optischen Sendevorrichtung, wie sie oben beschrieben ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: ein schematisches Blockschaltbild eines Nachrichtenübertragungssystems mit einem ersten Ausführungsbeispiel einer erfindungsgemäßen optischen Sendevorrichtung, wobei jeweils auch die zugehörigen Frequenzspektren dargestellt sind; und
- Fig. 2: ein der Fig. 1 entsprechendes Blockschaltbild mit einem zweiten Ausführungsbeispiel einer erfindungsgemäßen optischen Sendevorrichtung, wobei jeweils auch die zugehörigen Frequenzspektren dargestellt sind.

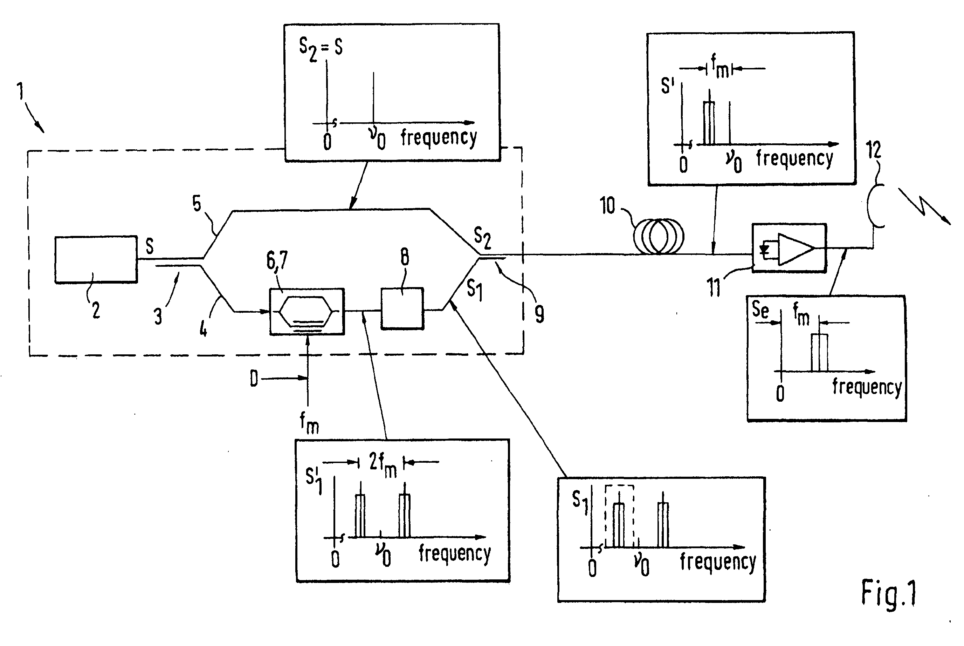

Bei der in Fig. 1 mit 1 bezeichneten optischen Sendevorrichtung wird das von einer Lichtquelle 2, z.B. einem Laser (DFB-Laser), emittierte optische Signal S mit festgelegter Frequenz ν₀ über einen Teiler 3 auf zwei Zweige 4, 5 aufgeteilt. Mit einem hochfrequenten Modulator 6, z.B. einem Mach-Zehnder-Modulator, werden im Zwei-Seitenbandverfahren zwei optische Seitenbandträger mit der Frequenz ν₀-fₘ und ν₀+fₘ, d.h. mit einem Frequenzabstand von 2fₘ im Millimeter(mm)-Wellenbereich, erzeugt und dabei die Frequenz ν₀ unterdrückt. Beiden Seitenbandträgern wird ein Datensignal D in einem Modulator 7, der mit dem Modulator 6 eine gemeinsame Einheit bildet, aufmoduliert, wobei die Bandbreite des Modulators 6, 7 gleich oder kleiner als die mm-Wellenfrequenz fₘ ist. Ein Seitenbandträger, im Ausführungsbeispiel der Fig. 1 der mit der höheren Frequenz ν₀+fₘ, wird mit Hilfe eines optischen Filters 8, z.B. ein optisches Transmissionsfilter (Fabry-Perot, elektrisches Festfilter etc.), ausgeblendet.

Der Signalanteil S₁ im ersten Zweig 4, der den niederfrequenten Seitenbandträger mit dem aufmodulierten Datensignal D aufweist, und der Signalanteil S₂ im zweiten Zweig. 5, der die Frequenz ν₀ aufweist, werden über einen Koppler 9 zu einem gemeinsamen Ausgangssignal S' zusammengefaßt, das über einen Lichtwellenleiter 10 einem optischen Empfänger 11 (Photodiode) zugeführt wird. Dort wird durch Differenzbildung das modulierte Seitenbandträgersignal von dem unmodulierten Trägerfrequenzsignal subtrahiert, so daß das übertragene Datensignal D als elektrisches Ausgangssignal Sₑ im mm-Wellen-Frequenzbereich fₘ am Ausgang 12 anliegt.

Bei dem in Fig. 2 gezeigten Ausführungsbeispiel einer optischen Sendevorrichtung 1' werden im Modulator 6 zwei Seitenbandträger ν₀-fₘ und ν₀+fₘ erzeugt, von denen einer, im Ausführungsbeispiel der höherfrequente Seitenbandträger ν₀+Fₘ, im optischen Filter 8 ausgeblendet wird. Im zweiten Zweig 5 wird dem optischen Signal S mittels eines weiteren Modulators 7' das Datensignal D aufmoduliert, wobei die Bandbreite des weiteren Modulators 7' größer oder gleich der Frequenz des Datensignals D ist. Die beiden Signalanteile S₁, S₂ werden im Koppler 9 wieder zusammengefaßt, wodurch sich ein optisches Ausgangssignal S' mit einem unmodulierten Frequenzanteil ν₀-fₘ und einem mit dem Datensignal D modulierten Frequenzanteil ν₀ ergibt.

In beiden Ausführungsbeispielen ergeben sich so ein modulierter Signalanteil ν₀-fₘ (Fig. 1) bzw. ν₀ (Fig. 2) und ein unmoduliertes Referenzsignal ν₀ (Fig. 1) bzw. ν₀-fₘ (Fig. 2), deren Frequenzabstand durch die Modulationsfrequenz fₘ gegeben ist.

## Patentansprüche

1. Verfahren zum Erzeugen eines optischen Ausgangssignals (S'), bei dem aus einem optischen Signal (S) festgelegter Frequenz (ν₀) zwei optische Signalanteile (S₁, S₂) unterschiedlicher Frequenzen erzeugt werden, wobei dem einen der beiden optischen Signalanteile (S₁, S₂) ein Datensignal (D) aufgeprägt wird und beide optischen Signalanteile (S₁, S₂) gemeinsam das optische Ausgangssignal (S') bilden,
**dadurch gekennzeichnet,**
**daß** das optische Signal (S) zwei Zweigen (4, 5) zugeführt wird, daß in einem der beiden Zweige (4, 5) bezüglich des optischen Signals (S) zwei optische Seitenbawdträger (vₒ-fₘ, vₒ+fₘ) erzeugt werden, von denen ei nes ausgeblendet wird, daß dem optischen signal (S) in einem der beiden zweige (4, 5) ein Datensignal (D) aufgeprägt wird, und daß danach die beiden optischen Signalanteile (S₁, S₂) aus den beinden Zweigen (4, 5) wieder zu einem einzigen optischen Ausgangssignal (S') zusammengeführt werden.

2. verfahren nach Anspruch 1, **dadurch gekennzeichnet, daß** in demselben Zweig (4) die beiden Seitenbandträger (ν₀-fₘ, ν₀+fₘ) erzeugt und das Datensignal (D) aufgeprägt werden.

3. Verfahren nach Anspruch 1, **dadurch gekennzeichnet, daß** in dem einen Zweig (4) die beiden Seitenbandträger (ν₀-fₘ, ν₀+fₘ) erzeugt werden und in dem anderen Zweig (5) das Datensignal (D) aufgeprägt wird.

4. Verfahren nach einem der vorhergehenden Ansprüche, **dadurch gekennzeichnet, daß** die beiden Seitenbandträger (ν₀-_{fm}, ν₀+fₘ) durch Modulation mittels eines elektrischen Millimeterwellen-Signals mit festgelegter elektrischer Frequenz (fₘ) erzeugt werden.

5. Optische Sendevorrichtung (1; 1') zum Erzeugen eines optischen Ausgangssignals (S') mit zwei optischen Signalanteilen (S₁, S₂), umfassend eine die zwei optischen Signalanteile (S₁, S₂) aus einem optischen Signal (S) festgelegter Frequenz (ν₀) erzeugende Einrichtung (6) und einen Modulator (7; 7'), der einem der beiden optischen Signale (S₁, S₂) ein Datensignal (D) aufprägt, insbesondere zum Durchführen des Verfahrens nach einem der vorhergehenden Ansprüche,
**gekennzeichnet durch**
einen optischen Teiler (3), der das optische Signal (S) der Lichtquelle zwei Zweigen (4, 5) zuführt,
eine im ersten Zweig (4) vorgesehene Einrichtung (6) zum Erzeugen zweier optischer Seitenbandträger (ν₀-fₘ, ν₀+fₘ) bezüglich des optischen Signals (S),
ein der Einrichtung (6) nachgeordnetes optisches Filter (8) zum Ausblenden eines der beiden Seitenbandträger (ν₀-fₘ, ν₀+fₘ),
wobei der Modulator (7, 7') dem optischen Signal (S) in einem der beiden Zweige (4, 5) ein Datensignal (D) aufprägt, und
einen optischen Koppler (9), der die optischen Signalanteile (S₁, S₂) in beiden Zweigen (4, 5) wieder zu einem gemeinsamen optischen Ausgangssignal (S') zusammenführt.

6. Optische Sendevorrichtung nach Anspruch 5, **dadurch gekennzeichnet, daß** in demselben Zweig (4) sowohl die Einrichtung (6) zur Erzeugung der beiden Seitenbandträger (ν₀-fₘ, ν₀+fₘ) als auch der Modulator (7) zum Aufprägen des Datensignals (D) vorgesehen sind.

7. Optische Sendevorrichtung nach Anspruch 6, **dadurch gekennzeichnet, daß** die Einrichtung (6) und der Modulator (7) als ein gemeinsamer Modulator ausgebildet sind.

8. Optische Sendevorrichtung nach Anspruch 5, **dadurch gekennzeichnet, daß** in dem einen Zweig (4) die Einrichtung (6) zur Erzeugung der beiden Seitenbandträger (ν₀-fₘ, ν₀+fₘ) und in dem anderen Zweig (5) der Modulator (7') zum Aufprägen des Datensignals (D) vorgesehen ist.

9. Nachrichtenübertragungssystem, mit einem Lichtwellenleiter (10), einem optischen Empfänger (11) und einer optischen Sendevorrichtung (1, 1') nach einem der Ansprüche 5 bis 8.

## Claims

1. Method for generating an optical output signal (S'), in which two optical signal components (S₁, S₂) of different frequencies are generated from one optical signal (S) of a set frequency (ν₀) , a data signal (D) being impressed on one of the two optical signal components (S₁, S₂) and both optical signal components (S₁, S₂) together forming the optical output signal (S'),
**characterized in that**
the optical signal (S) is fed to two paths (4, 5), that in one of the two paths (4, 5) two optical sideband carriers (ν₀-fₘ, ν₀+fₘ) are generated in relation to the optical signal (S), one of these two being removed, that a data signal (D) is impressed on the optical signal (S) in one of the two paths (4, 5), and that afterwards the two optical signal components (S₁, S₂) from the two paths (4, 5) are merged again into a single optical output signal (S').

2. Method according to Claim 1, **characterized in that** both sideband carriers (ν₀-fₘ, ν₀+fₘ) are generated and the data signal (D) is impressed in the same path (4).

3. Method according to Claim 1, **characterized in that** in the one path (4) the two sideband carriers (ν₀₋fₘ, ν₀+fₘ arc generated and in the other path (5) the data signal (D) is impressed.

4. Method according to one of the preceding claims, **characterized in that** the two sideband carriers (ν₀-fₘ, ν₀+fₘ) are generated by modulation by means of an electrical millimetre-wave signal with a set electrical frequency (fₘ).

5. Optical transmission device (1; 1') fox generating an optical output signal (S') with two optical signal components (S₁, S₂), comprising a facility (6) generating the two optical signal components (S₁, S₂) from one optical signal (S) of a set frequency (ν₀), and a modulator (7; 7') which impresses a data signal (D) on one of the two optical signals (S₁, S₂), in particular for implementing the method according to one of the preceding claims,
**characterized by**
an optical divider (3), which feeds the optical signal (S) of the light source to two paths (4, 5), a facility (6) provided in the first path (4) for generating two optical sideband carriers (ν₀-fₘ, ν₀+fₘ) in relation to the optical signal (S), arranged after the facility (6) an optical filter (8) for removing one of the two sideband carriers (ν₀-fₘ, ν₀+fₘ),
the modulator (7; 7') impressing a data signal (D) on the optical signal (S) in one of the two paths (4, 5), and
an optical coupler (9), which merges the optical signal components (S₁, S₂) in both paths (4, 5) into a common optical output signal (S') again.

6. Optical transmission device according to Claim 5, **characterized in that** both the facility (6) for generating the two sideband carriers (ν₀-fₘ, ν₀+fₘ) and also the modulator (7) for impressing the data signal (D) are provided in the same path (4).

7. Optical transmission device according to Claim 6, **characterized in that** the facility (6) and the modulator (7) are developed as a common modulator.

8. Optical transmission device according to Claim 5, **characterized in that** in the one path (4) the facility (6) for generating the two sideband carriers (ν₀-fₘ, ν₀+fₘ) is provided, and in the other path (5) the modulator (7') for impressing the data signal (D).

9. Telecommunication system, with an optical waveguide (10), an optical receiver (11) and an optical transmission device (1, 1') according to one of the Claims 5 to 8.

## Revendications

1. Procédé pour générer un signal de sortie (S') optique, dans lequel deux fractions de signal optique (S₁, S₂) de fréquences différentes sont générées à partir d'un signal optique (S) de fréquence définie (v₀), un signal de données (D) étant imprimé à l'une des deux fractions de signal optique (S₁, S₂) et les deux fractions de signal optique (S₁, S₂) formant ensemble le signal de sortie optique (S'),
**caractérisé en ce que**
le signal optique (S) est amené à deux branches (4, 5), **en ce que** deux supports de bande latérale optique (vₒ - fₘ, vₒ + fₘ) sont générés dans l'une deux branches (4, 5) en ce qui concerne le signal optique (S), support dont l'un est diaphragmé, **en ce qu'**un signal de données (D) est imprimé au signal optique (S) dans l'une des deux branches (4, 5), et **en ce que** ensuite les deux fractions de signal optique (S₁, S₂) provenant des deux branches (4, 5) sont regroupées à nouveau pour former un seul signal de sortie optique (S').

2. Procédé selon la revendication 1, **caractérisé en ce que** les deux supports de bande latérale (v₀ - fₘ, ν₀ + fₘ) sont générés dans la même branche, et le signal de données (D) est imprimé.

3. Procédé selon la revendication 1, **caractérisé en ce que** les deux supports de bande latérale (v₀- fₘ, ν₀ + fₘ) sont générés dans une branche (4) et le signal de données (D) est imprimé dans l'autre branche (5).

4. Procédé selon l'une quelconque des revendications précédentes, **caractérisé en ce que** les deux supports de bande latérale (v₀- fₘ, ν₀ + fₘ) sont générés par modulation au moyen d'un signal d'onde électrique de l'ordre du millimétre avec une fréquence électrique (fₘ) définie.

5. Dispositif d'émission optique (1; 1') pour générer un signal de sortie optique (S') avec deux fractions de signal optique (S₁, S₂), comprenant un appareil (6) générant les deux fractions de signal optique (S₁, S₂) à partir d'un signal optique (S) de fréquence (v₀) définie et un modulateur (7 ; 7'), qui imprime un signal de données (D) à l'un des deux signaux optiques (S₁, S₂), en particulier pour la mise en oeuvre du procédé selon l'une quelconque des revendications précédentes,
**caractérisé par**
un diviseur (3) optique, qui amené le signal (S) optique de la source lumineuse à deux branches (4, 5),
un appareil (6) prévu dans la première branche (4) pour générer deux supports de bande latérale optique (v₀ -- fₘ, v₀ + fₘ) en ce qui concerne le signal (S) optique,
un filtre (8) optique placé en aval de l'appareil (6) pour diaphragmer l'un des deux supports de bande latérale (ν₀ -- fₘ, v₀ + fₘ),
le modulateur (7, 7') imprimant un signal de données (D) au signal (S) optique dans l'une des deux branches (4, 5), et
un coupleur (9) optique, qui regroupe les fractions de signal optique (S₁, S₂) dans les deux branches (4, 5) à nouveau pour former un signal de sortie (S') optique commun.

6. Dispositif d'émission optique selon la revendication 5, **caractérisé en ce que** aussi bien l'appareil (6) pour générer les deux supports de bande latérale (v₀- fₘ, v₀ + fₘ) que le modulateur (7) pour l'impression du signal de données (D) sont prévus dans la même branche (4).

7. Dispositif d'émission optique selon la revendication 6, **caractérisé en ce que** l'appareil (6) et le modulateur (7) sont conçus comme un modulateur commun.

8. Dispositif d'émission optique selon la revendication 5, **caractérisé en ce que** l'appareil (6) pour générer les deux supports de bande latérale (v₀-fₘ, v₀+fₘ) est prévu dans une branche (4) et le modulateur (7') pour l'empreinte du signal de données (D) est prévu dans l'autre branche (5).

9. Système de transmission de messages, avec un guide d'ondes optiques (10), un récepteur (11) optique et un dispositif d'émission (1,1') optique selon l'une quelconque des revendications des revendications 5 à 8.
